(19) Europäisches Patentamt
European Patent Office
Office européen des brevets

(11) EP 2 148 070 A2

(12) **EUROPÄISCHE PATENTANMELDUNG**

(43) Veröffentlichungstag:
27.01.2010 Patentblatt 2010/04

(51) Int Cl.:
*F02D 41/14* (2006.01)    *F02D 41/40* (2006.01)

(21) Anmeldenummer: 09164733.9

(22) Anmeldetag: 07.07.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(30) Priorität: 23.07.2008 DE 102008040626

(71) Anmelder: ROBERT BOSCH GMBH
70442 Stuttgart (DE)

(72) Erfinder:
• Olbrich, Stephan
  70190, Stuttgart (DE)
• Beuer, Wolfgang
  70374, Stuttgart (DE)
• Sommerer, Andreas
  71394, Kernen (DE)
• Meyer-Salfeld, Steffen
  71229, Leonberg (DE)

(54) **Verfahren zur Bestimmung der eingespritzten Kraftstoffmasse einer Einzeleinspritzung und Vorrichtung zur Durchführung des Verfahrens**

(57) Ein Verfahren zur Bestimmung einer in wenigstens einen Brennraum einer Brennkraftmaschine mittels wenigstens einer Einspritzung unter hohem Druck eingespritzten Kraftstoffmasse einer Einzeleinspritzung, wobei mittels eines Vergleichs eines Maßes für die Istmenge des eingespritzten Kraftstoffs wenigstens einer Testeinspritzung, die aufgrund eines Maßes für eine vorgegebene Sollmenge einer gewünschten Einzeleinspritzung vorgenommen wird, und des Maßes für die Sollmenge der Teileinspritzung eine Korrekturgröße für die Einzeleinspritzung festgelegt wird, ist **dadurch gekennzeichnet, dass** eine Mehrzahl von zeitlich unmittelbar aufeinanderfolgender Testeinspritzungen vorgenommen wird.

Fig. 1

Printed by Jouve, 75001 PARIS (FR)

**Beschreibung**

Stand der Technik

Die Erfindung betrifft ein Verfahren zur Bestimmung einer in wenigstens einen Brennraum einer Brennkraftmaschine eingespritzten Kraftstoffmasse einer Einzeleinspritzung sowie eine Vorrichtung zur Durchführung des Verfahrens nach der Gattung der unabhängigen Ansprüche. Unter "Einzeleinspritzung" versteht die Erfindung eine einzelne Einspritzung z.B. eine Vor-, eine Haupt- oder eine Nacheinspritzung.

Gegenstand der Erfindung sind auch ein Computerprogramm sowie ein Computerprogrammprodukt mit einem Programmcode, der auf einem maschinenlesbaren Träger gespeichert ist, zur Durchführung des Verfahrens.

Für den Betrieb moderner Brennkraftmaschinen, insbesondere selbstzündender Dieselmotoren ist eine hochgenaue Zumessung der Kraftstoffmasse bei sehr hohen Einspritzdrücken erforderlich. Die Präzision der gesteuerten KraftstoffZumessung wird jedoch bei modernen Einspritzsystemen einerseits durch die Fertigungsgenauigkeit und andererseits durch sich über die Laufzeit der Brennkraftmaschine verändernde Eigenschaften der Komponenten des Einspritzsystems, insbesondere Drift-Erscheinungen, welche beispielsweise zu erhöhten Toleranzen führen, beschränkt. Im Einzelfall genügt nun die erzielbare Genauigkeit möglicherweise nicht, um die motorischen Anforderungen zu erfüllen. Insbesondere können Ungenauigkeiten der Voreinspritzmengen je nach Betriebspunkt zu deutlich erhöhten Emissionen, beispielsweise im Teillastbetrieb, oder zu auffälligen und damit störenden Verbrennungsgeräuschen führen. Es besteht daher ein großes Interesse, die eingespritzte Kraftstoffmasse sehr genau zu kennen und insbesondere die während des Betriebs der Brennkraftmaschine tatsächlich auftretenden Abweichungen der realen Einspritzmenge von der gewünschten Einspritzmenge zu kennen, um so entsprechende Korrekturen der Ansteuerung der Einspritzventile vornehmen und so eine korrekte Einspritzmenge sicherstellen zu können.

Aus der nicht vorveröffentlichten DE 10 2006 061 683.9 geht ein Verfahren und eine Vorrichtung der gattungsgemäßen Art hervor, bei der mittels eines Vergleichs eines Maßes für die Istmenge des eingespritzten Kraftstoffs wenigstens einer Test-Nacheinspritzung, die aufgrund eines Maßes für eine vorgegebene Sollmenge einer gewünschten Einspritzung vorgenommen wird, und des Maßes für die Sollmenge dieser Test-Nacheinspritzung eine Korrekturgröße für die Einspritzung festgelegt wird. Mittels der Korrekturgröße werden die Parameter der Ansteuerung der Einspritzventile korrigiert und damit eine korrekte Einspritzmenge sichergestellt.

Das Verfahren beruht damit darauf, aus der Differenz des Lambdasignals im Normalbetrieb und des Lambdasignals im Betrieb der zusätzlichen späten und damit momentenneutralen Nacheinspritzmenge die Menge der Nacheinspritzungen zu bestimmen. Nun hat sich gezeigt, dass der zugrundeliegende Messeffekt mit zunehmender Größe der Brennkraftmaschine abgeschwächt wird und dass für eine zylinderindividuelle Bestimmung von Teileinspritzmengen im unteren Milligramm-Bereich Genauigkeit und Auflösung der Lambdasonde zu gering ist.

Offenbarung der Erfindung

Vorteile der Erfindung

Das erfindungsgemäße Verfahren mit den Merkmalen des unabhängigen Anspruchs 1 ermöglicht es, die in wenigstens einen Brennraum einer Brennkraftmaschine mittels wenigstens einer Einspritzung unter hohem Druck eingespritzte Kraftstoffmasse einer Einzeleinspritzung sehr genau zu bestimmen. Dies geschieht dadurch, dass mittels eines Vergleichs eines Maßes für die Istmenge des eingespritzten Kraftstoffs einer Mehrzahl von unmittelbar aufeinanderfolgenden Testeinspritzungen, die aufgrund eines Maßes für eine vorgegebene Sollmenge einer Einzeleinspritzung vorgenommen werden, und des Maßes für die Sollmenge dieser Testeinspritzungen eine Korrekturgröße für die Einzeleinspritzung festgelegt wird. Mittels dieser Korrekturgröße können die Parameter der Ansteuerung der Einspritzventile korrigiert und damit eine korrekte Einspritzmenge sichergestellt werden. Das Verfahren ermöglicht es anders ausgedrückt, aus der real eingespritzten Kraftstoffmasse der Testeinspritzungen, deren Einspritzmengen bevorzugt so gewählt werden, dass jede bevorzugte Menge der Menge der gewünschten Einzeleinspritzung entspricht, das Verhältnis zwischen realer und gewünschter Einspritzmenge dieser Testeinspritzungen zu bestimmen, hieraus die Korrekturgröße für die Einzeleinspritzung, das heißt eine Korrektur der Parameter der Ansteuerung der Einspritzventile abzuleiten, um so eine korrekte Einspritzmenge für die Einzeleinspritzung in allen Motorbetriebsbereichen sicherzustellen.

Die einer Einzeleinspritzung zugeordnete Menge wird also mehrfach eingespritzt, um so die Gesamtmenge der zusätzlichen Einspritzung zu erhöhen. Dies führt zu einer Vergrößerung des zugrunde liegenden Messeffekts, was wiederum zur Folge hat, dass die Anforderungen an die Auflösung des Lambdasignals geringer werden, so dass die im Stand der Technik vorliegende Genauigkeit und Auflösung der Lambdasonde ausreicht.

Eine vorteilhafte Ausgestaltung des Verfahrens sieht vor, möglichst viele der zu bestimmenden Einzeleinspritzung entsprechenden Testeinspritzungen als momentenneutrale Nacheinspritzungen einzuspritzen.

Die maximale Nacheinspritzmenge und Anzahl der Testeinspritzungen wird betriebspunktabhängig bestimmt.

Eine andere Möglichkeit sieht vor, möglichst viele der zu bestimmenden Einzeleinspritzung entsprechenden Testeinspritzungen als Voreinspritzungen im Schubbetrieb einzuspritzen.

Gemäß einer bevorzugten Ausgestaltung ist vorgesehen, das Maß für die Istmenge aus einem im Abgasbereich gemessenen Lambdasignal zu ermitteln. Mit dieser Maßnahme kann das von einem im Abgasbereich ohnehin zur Motorsteuerung oder -regelung angeordneten Lambdasensor bereitgestellte Sensorsignal herangezogen werden zur Ermittlung des Maßes für die Istmenge.

Eine andere Möglichkeit sieht eine Berechnung der im Abgasbereich auftretenden Luftzahl Lambda vor.

Gemäß einer Ausgestaltung ist vorgesehen, die Korrekturgröße im Rahmen eines periodisch stattfindenden Lernverfahrens festzulegen, das in vorgegebenen Betriebszuständen der Brennkraftmaschine durchgeführt wird.

Bevorzugt werden die im Rahmen des Lernverfahrens ermittelten Korrekturgrößen und die Maße für die Istmengen des eingespritzten Kraftstoffs sowie für die Sollmengen des eingespritzten Kraftstoffs in einem Lern-Kennfeld abgelegt, auf das später im Betrieb leicht zurückgegriffen werden kann.

Als Maß für die eingespritzte Kraftstoffmasse kann die eingespritzte Kraftstoffmenge oder eine die eingespritzte Kraftstoffmenge charakterisierende Größe, z.B. die Ansteuerdauer, herangezogen werden.

Die Testeinspritzungen zur Ermittlung der Korrekturgröße können bei einer ersten Ausgestaltung des Verfahrens in einen Brennraum einer mindestens einen Brennraum aufweisenden Brennkraftmaschine eingespritzt werden. Auf diese Weise kann injektorindividuell ein Lern-Kennfeld ermittelt werden, sodass eine zylinderindividuelle Korrektur der Einzeleinspritzung möglich ist.

Eine andere Ausgestaltung sieht vor, die Korrekturgröße aufgrund von Testeinspritzungen in alle Brennräume einer mehrere Brennräume aufweisenden Brennkraftmaschine zu ermitteln. Diese Maßnahme hat den Vorteil, dass die mittlere Abweichung aller Injektoren vom Sollwert ermittelt und entsprechend korrigiert werden kann.

Als Testeinspritzungen kommen wie erwähnt Test-Voreinspritzungen oder Test-Nacheinspritzungen in Betracht, die zylinderindividuell oder bei allen Zylindern gleichzeitig eingespritzt werden.

Die erfindungsgemäße Vorrichtung zum Betreiben einer Brennkraftmaschine betrifft zunächst ein Steuergerät, das zur Durchführung des Verfahrens hergerichtet ist. Das Steuergerät umfasst vorzugsweise wenigstens einen elektrischen Speicher, in dem die Verfahrensschritte als Computerprogramm abgelegt sind. Das Steuergerät umfasst ferner vorzugsweise einen speziellen Speicher, in welchem die unterschiedlichen Werte der Korrekturgröße abgelegt werden.

Die Vorrichtung weist ferner vorzugsweise eine Einrichtung zur Bestimmung einer maximalen Anzahl von Testeinspritzungen der zu bestimmenden Menge, die den Motorbetrieb nicht negativ beeinflussen, auf.

Zeichnung

Ausführungsbeispiele der Erfindung sind in der Zeichnung dargestellt und in der nachfolgenden Beschreibung näher erläutert.

In der Zeichnung zeigen:

Fig. 1 das erfindungsgemäße Verfahren in Form von Funktionsblöcken und

Fig. 2 schematisch Einspritzungen nach dem erfindungsgemäßen Verfahren.

Ausführungsformen der Erfindung

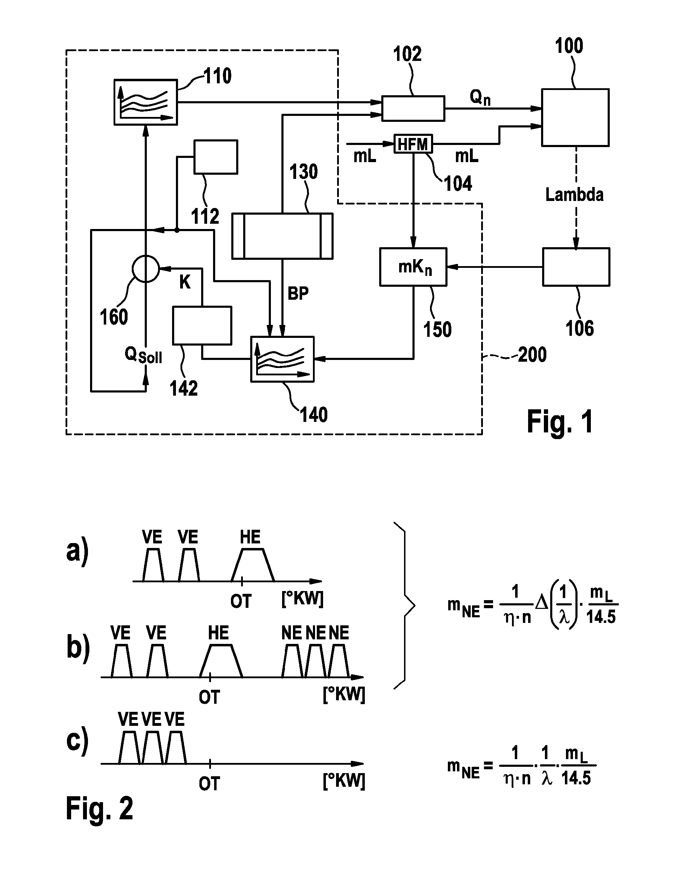

Figur 1 zeigt Funktionsblöcke, die zur Durchführung eines erfindungsgemäßen Verfahrens zum Betreiben einer Brennkraftmaschine geeignet sind. In Fig. 1 ist eine Brennkraftmaschine 100 dargestellt, die vorzugsweise mehrere Brennräume, beispielsweise vier Brennräume aufweist, in die mittels Injektoren Kraftstoff eingespritzt wird. Der Brennkraftmaschine 100 wird ferner eine Luftmasse $m_L$ zugeführt, die mittels einer geeigneten Einrichtung 104, beispielsweise mittels eines Heißfilmluftmassenmessers HFM auf an sich bekannte Weise erfasst wird.

Die Ansteuerung der Injektoren 102 erfolgt gesteuert mithilfe eines Ansteuerdauerkennfelds 110, aus dem die einer gewünschten Sollmenge $Q_{Soll}$ zugeordnete Ansteuerdauer der Injektoren 102, mittels denen der Kraftstoff in die Brennräume eingespritzt wird, entnehmbar ist. Zur Regelung der Diesel-Brennkraftmaschine 100 ist nun eine hochgenaue Zumessung der Kraftstoffmasse bei sehr hohen Einspritzdrücken erforderlich. Die erreichbare Genauigkeit der gesteuerten Kraftstoff-Zumessung bei modernen Einspritzsystemen wird jedoch einerseits durch die Fertigungsgenauigkeit und andererseits durch ein Driften der Bauteile während des Betriebs der Brennkraftmaschine, beispielsweise aufgrund Verschleißes und dergleichen beschränkt. Insbesondere führen Ungenauigkeiten von Voreinspritzungen VE je nach Betriebspunkt zu deutlich erhöhten Emissionen, beispielsweise im Teillast-Betrieb, oder zu auffälligen Verbrennungsgeräuschen.

Grundidee der Erfindung ist es nun, Abweichungen der realen Einspritzmengen von der gewünschten Einspritzmenge während des normalen Fahrbetriebs bzw. im Schub mittels einer Mehrzahl von zeitlich unmittelbar aufeinanderfolgenden spät abgesetzten und vergleichbaren Nacheinspritzmengen, bzw. Voreinspritzungen im Schub, zu bestimmen und der Motorsteuerung zur Verfügung zu stellen. Mit dieser Information ist eine Korrektur der Ansteuerung der Injektoren 102 möglich. Auf diese Weise ist auch eine Verkleinerung der Toleranzen des Einspritzsystems möglich.

Um nun die tatsächlich eingespritzte Kraftstoffmasse sehr präzise bestimmen zu können und auf diese Weise eine Korrektur der Einspritzmenge vornehmen zu können, sieht die Erfindung vor, bei einer Mehrzahl von Testeinspritzungen, die bevorzugt als nicht momentenwirksame Nacheinspritzungen im Motorbetrieb oder Voreinspritzungen im Schubbetrieb ausgeführt sind, die reale Einspritzmenge zu ermitteln und das Verhältnis zwischen realer und gewünschter Einspritzmenge in einem Lern-Kennfeld abzulegen. Dies geschieht auf nachfolgend näher beschriebene Weise.

Ein Lernbetriebskoordinator 130, der Teil eines Steuergerätes 200 ist, veranlasst die Ansteuerung des Injektors 102, mittels dem Kraftstoff während der Testeinspritzungen $Q_n$ in einen Brennraum der Brennkraftmaschine 100 eingespritzt wird. Gleichzeitig wird die eingespritzte Luftmasse $m_L$ mittels des Heißfilmluftmassenmessers 104 ermittelt und die Luftzahl Lambda durch beispielsweise eine Lambdasonde 106 erfasst und aus diesen Größen in einer Recheneinheit 150 die tatsächlich eingespritzte Kraftstoffmasse $mK_n$ während der Testeinspritzungen berechnet. Diese Kraftstoffmasse $mK_n$ wird in dem Lernkennfeld 140 gespeichert.

Eine Änderung von Lambda aufgrund der Einspritzungen kann für n Einspritzungen durch die Beziehung

$$\text{Delta } (1/\text{Lambda}) = (14{,}5 \times n \times mK_n \times \text{Eta})/mL,$$

wobei Eta eine einen Nachweisgrad definierende Größe darstellt, die beispielsweise empirisch ermittelt wird und dem Umstand Rechnung trägt, dass dann, wenn die Einspritzungen als sehr späte Nacheinspritzungen ausgeführt sind, diese nicht mehr vollständig verbrennen und abhängig von der Ausführung der Lambda-Sonde 106 nur niedrige HC-Konzentrationen vollständig umgesetzt und nachgewiesen werden können. Das Maß für den Nachweisgrad Eta erlaubt eine eineindeutige Abbildung zwischen real eingespritzter Menge der Testeinspritzungen $mK_n$ und dem Lambdasignal.

Es wird nun die Differenz oder das Verhältnis aus der so ermittelten und einer angeforderten Kraftstoffmasse $mK_{n,Soll}$ der Testeinspritzungen ermittelt und in dem Lernkennfeld 140 gespeichert, dessen Koordinaten den jeweiligen Betriebspunkt BP des Einspritzventils hinreichend charakterisieren. Alternativ hierzu können auch die zu der gemessenen Ist-Kraftstoffmasse gehörenden Ansteuerparameter gespeichert werden. Äquivalent hierzu ist auch die Speicherung der gegenüber den nominellen Ansteuerparametern notwendigen Korrektur dieser Parameter möglich, um die gewünschte Einspritzmenge zu erreichen.

Die Idee der vorliegenden Erfindung besteht darin, die zusätzliche Testeinspritzmenge mehrfach einzuspritzen. Die Gesamtmenge der zusätzlichen Einspritzung wird hierdurch erhöht, was zu einem größeren Signalhub führt. Hierdurch werden die Anforderungen an die Auflösung des Lambdasignals geringer.

Der Gesamtfehler $e_{ges}$ hängt im Wesentlichen von der Sauerstoffkonzentration und der Luftmasse ab. Beide ändern sich durch die zusätzlich eingespritzte Menge nur unwesentlich. Die Teileinspritzungen werden vorteilhafterweise so gewählt, dass gleich große Mengen eingespritzt werden. Ist dies der Fall, so gilt für die Einzelmenge bei n Teileinspritzungen: $mK_n = mK_{ges}/n$. Der Gesamtfehler $e_{ges}$ teilt sich entsprechend auf die Einzeleinspritzungen wie folgt auf: $e_n = e_{ges}/n$. Der Fehler einer Einzeleinspritzung bei einer in n-Teile aufgespaltenen Nacheinspritzung oder Voreinspritzung ist somit deutlich reduziert gegenüber einer Einfacheinspritzung.

Das Steuergerät weist eine Schaltungseinrichtung oder ein entsprechendes Unterprogramm auf, welches eine Entscheidung erlaubt, wie viele Teileinspritzungen möglich sind und in welchem Abstand diese eingespritzt werden sollen. Der Wahl dieser Parameter, d.h. die Menge der Teileinspritzungen und deren zeitlicher Abstand werden so gewählt, dass ein minimaler Einfluss durch hydraulische Effekte im Einspritzsystem, beispielsweise Druckwellen, hervorgerufen wird, bis ein möglichst großer Winkelbereich der Kurbelwelle zur Verfügung steht. In diesem Lernbetriebskoordinator werden auch die Mengen $m_e$ der Testeinspritzungen bestimmt, die sich aus der Gesamtmenge $mK_{ges}$ dividiert durch die Anzahl der Einspritzungen n ergibt: $mK_n = mK_{ges}/n$.

In Fig. 2 ist schematisch ein Einspritzschema dargestellt.

In dem oberen mit a) bezeichneten Teil ist das Einspritzschema mit zwei Voreinspritzungen VE und einer Haupteinspritzung HE über dem Kurbelwellenwinkel KW angegeben. Die Haupteinspritzung erfolgt etwa im Bereich des oberen Totpunkts OT.

Der mittlere Teil, Fig. 2b, zeigt das erfindungsgemäße Verfahren mit zwei Voreinspritzungen VE, der Haupteinspritzung HE und der Mehrzahl der gleichen momentenneutralen Nacheinspritzungen NE. Die Menge der Nacheinspritzungen wird mit Hilfe der oben dargestellten Gleichung berechnet.

Der untere Teil, Fig. 2c, zeigt das erfindungsgemäße Verfahren mit drei Voreinspritzungen VE im Schubbetrieb.

Die Menge der Voreinspritzungen wird mit Hilfe der oben dargestellten Gleichung berechnet.

Das vorstehend beschriebene Verfahren wurde anhand der Einspritzung der Kraftstoffmasse in einen Brennraum einer mehrere Brennräume aufweisenden Brennkraftmaschine erläutert. Die Einspritzung in einen Brennraum ermöglicht es, ein injektorindividuelles Lern-Kennfeld 140 zu bestimmen.

Es versteht sich jedoch, dass das Verfahren hierauf nicht beschränkt ist. Es ist vielmehr auch möglich, die Nacheinspritzung in allen Zylindern gleichzeitig vorzunehmen. Auf diese Weise kann die mittlere Abweichung aller Injektoren 102 vom Sollwert ermittelt werden und in dem Lern-Kennfeld 140 gespeichert werden.

Eine zweite Komponente der hier beschriebenen Funktion stellt die Anwendung des Gelernten dar. Die so bei Testeinspritzungen gelernten Verhältnisse, deren Parameter Gegenstand des Lern-Kennfelds 140 sind, werden anschließend im normalen Betrieb der Brennkraftmaschine bei der Bestimmung der Menge der Einspritzungen berücksichtigt.

Die angeforderte Kraftstoffmasse $Q_{Soll}$ wird in einer Einspritzungsbestimmungseinrichtung 112 ermittelt. Mit Hilfe von $Q_{soll}$ wird aus dem Lernkennfeld 140 der Korrekturwert ausgelesen. In einer Schaltungseinrichtung 142 erfolgt eine Anpassung des Korrekturwerts an den aktuellen Betriebspunkt, wenn z.B. die Testeinspritzung als Nacheinspritzung erfolgt ist und eine Korrektur der Voreinspritzung oder der Haupteinspritzung erfolgen soll, oder wenn umgekehrt die Testeinspritzung als Voreinspritzung erfolgt ist und eine Korrektur der Nacheinspritzung oder der Haupteinspritzung erfolgen soll. In diesem Falle muss der aus dem Lern-Kennfeld 140 entnehmbare Korrekturwert an den jeweiligen Einspritztyp angepasst werden.

Hierdurch wird letztendlich die gewünschte Menge der Solleinspritzungen soweit durch die Korrektur-Größe K verändert, dass die real eingespritzte Menge gerade wieder dem ursprünglichen Mengenwunsch entspricht.

Das Maß für die eingespritzte Kraftstoffmasse kann die Kraftstoffmenge selbst sein, wie oben beschrieben. Es ist aber statt einer Abweichung zwischen der Soll- und der Ist-Kraftstoffmenge zur Bestimmung der korrekten Ist-Masse auch möglich, die notwendige Ansteuerdauerkorrektur zu ermitteln und abzuspeichern. Die Speicherung der Korrekturwerte der Ansteuerdauerkorrektur kann dabei ähnlich wie bei der sogenannten Nullmengenkorrektur erfolgen. Alternativ hierzu kann das Lernkennfeld so gestaltet werden, dass zu der ermittelten Ist-Kraftstoffmasse die benötigten Ansteuerparameter (z.B. Ansteuerdauer) oder die jeweilige Korrektur gegenüber den nominellen Ansteuerparametern abgespeichert wird.

Welche der beiden Varianten tatsächlich eingesetzt wird, hängt auch von der erreichbaren Genauigkeit der beiden Varianten ab.

Das vorstehend beschriebene Verfahren kann beispielsweise als Computerprogramm auf einem Rechengerät, insbesondere dem Steuergerät 200 einer Brennkraftmaschine implementiert sein und dort ablaufen. Der Programmcode kann auf einem maschinenlesbaren Träger gespeichert sein, den das Steuergerät 200 einlesen kann. Insoweit kann das in Verbindung mit Fig. 1 vorbeschriebene Verfahren auch als Computerprogramm implementiert sein.

**Patentansprüche**

1. Verfahren zur Bestimmung einer in wenigstens einen Brennraum einer Brennkraftmaschine (100) mittels wenigstens einer Einspritzung unter hohem Druck eingespritzten Kraftstoffmasse einer Einzeleinspritzung, wobei mittels eines Vergleichs eines Maßes für die Istmenge des eingespritzten Kraftstoffs wenigstens einer Testeinspritzung, die aufgrund eines Maßes für eine vorgegebene Sollmenge einer gewünschten Einzeleinspritzung vorgenommen wird, und des Maßes für die Sollmenge der Testeinspritzung eine Korrekturgröße für die Einzeleinspritzung festgelegt wird, **dadurch gekennzeichnet, dass** eine Mehrzahl (n) von zeitlich unmittelbar aufeinanderfolgenden Testeinspritzungen vorgenommen wird.

2. Verfahren nach Anspruch 1, **dadurch gekennzeichnet, dass** die Menge jeder der unmittelbar aufeinanderfolgenden Testeinspritzungen der Menge der zu messenden Einzeleinspritzung entspricht.

3. Verfahren nach einem der vorstehenden Ansprüche **dadurch gekennzeichnet, dass** die maximale Testeinspritzmenge sowie die Anzahl der aufeinanderfolgenden Testeinspritzungen ($mK_n$) und deren zeitlicher Ablauf betriebspunktabhängig bestimmt werden.

4. Verfahren nach einem der vorstehenden Ansprüche, **dadurch gekennzeichnet, dass** das Maß für die Istmenge aus einem im Abgasbereich gemessenen Lambdasignal ermittelt wird.

5. Verfahren nach einem der vorstehenden Ansprüche, **dadurch gekennzeichnet, dass** die Korrekturgröße im Rahmen eines Lernverfahrens ermittelt wird, das in vorgegebenen Betriebszuständen der Brennkraftmaschine (100) durchgeführt wird.

**6.** Verfahren nach Anspruch 5, **dadurch gekennzeichnet, dass** die im Rahmen des Lernverfahrens ermittelten Korrekturgrößen und die Maße für die Istmengen des eingespritzten Kraftstoffs sowie für die Sollmengen des eingespritzten Kraftstoffs in einem Lern-Kennfeld (140) abgelegt werden.

**7.** Verfahren nach einem der vorstehenden Ansprüche, **dadurch gekennzeichnet, dass** das Maß für die eingespritzte Kraftstoffmasse die Kraftstoffmenge oder eine Ansteuerdauer eines Kraftstoffinjektors (102) ist.

**8.** Verfahren nach einem der vorstehenden Ansprüche, **dadurch gekennzeichnet, dass** die Korrekturgröße aufgrund von Testeinspritzungen in einen Brennraum einer wenigstens einen Brennraum aufweisenden Brennkraftmaschine (100) ermittelt wird.

**9.** Verfahren nach einem der Ansprüche 1 bis 5, **dadurch gekennzeichnet, dass** die Korrekturgröße aufgrund von Vor- oder Nacheinspritzungen in mindestens einen Brennraum einer mehrere Brennräume aufweisenden Brennkraftmaschine (100) ermittelt wird.

**10.** Vorrichtung zum Betreiben einer Brennkraftmaschine (100), **dadurch gekennzeichnet, dass** zumindest ein zur Durchführung des Verfahrens nach einem der vorhergehenden Ansprüche hergerichtetes Steuergerät (200) vorgesehen ist.

**11.** Vorrichtung nach Anspruch 10, **dadurch gekennzeichnet, dass** das Steuergerät (200) wenigstens einen Korrekturgrößenspeicher (140) aufweist, in welchem während des Lernverfahrens ermittelte Korrekturwerte hinterlegt werden.

**12.** Vorrichtung nach Anspruch 11, **dadurch gekennzeichnet, dass** der Korrekturgrößenspeicher ein Lern-Kennfeld (140) ist.

**13.** Vorrichtung nach Anspruch10, **dadurch gekennzeichnet, dass** sie eine Einrichtung (130) zur Bestimmung einer maximalen Anzahl von Testeinspritzungen der zu bestimmenden Menge, die den Motorbetrieb nicht negativ beeinflussen, aufweist.

**14.** Vorrichtung nach Anspruch 10, **dadurch gekennzeichnet, dass** sie eine Schaltungseinrichtung (142) zur Anpassung der Korrekturwerte an den aktuellen Betriebspunkt, insbesondere im Falle der Ausführung der Testeinspritzung als Nacheinspritzung zur Korrektur der Voreinspritzung oder der Haupteinspritzung oder im Falle der Testeinspritzung als Voreinspritzung zur Korrektur der Nacheinspritzung oder der Haupteinspritzung, vorgesehen ist.

**15.** Computerprogramm, das alle Schritte eines Verfahrens nach einem der Ansprüche 1 bis 9 ausführt, wenn es auf einem Rechengerät abläuft.

**16.** Computerprogrammprodukt mit Programmcode, der auf einem maschinenlesbaren Träger gespeichert ist, zur Durchführung des Verfahrens nach einem der Ansprüche 1 bis 9, wenn das Programm auf einem Computer auf einem Steuergerät (200) ausgeführt wird.

Fig. 1

a)

$$m_{NE} = \frac{1}{\eta \cdot n} \Delta\left(\frac{1}{\lambda}\right) \cdot \frac{m_L}{14.5}$$

b)

c)

$$m_{NE} = \frac{1}{\eta \cdot n} \cdot \frac{1}{\lambda} \cdot \frac{m_L}{14.5}$$

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006061683